# EUROPÄISCHE PATENTSCHRIFT

(11) **EP 1 019 990 B1**
(45) Veröffentlichungstag und Bekanntmachung des Hinweises auf die Patenterteilung: **31.07.2002**
(21) Anmeldenummer: 98928121.7
(22) Anmeldetag: 03.04.1998
(51) Int. Cl.: H01R 43/08

(54) **VERFAHREN ZUM HERSTELLEN EINES KOMMUTATORRINGES FÜR EINEN KOMMUTATOR SOWIE DANACH HERGESTELLTER KOMMUTATOR**
METHOD FOR MAKING A COLLECTOR, AND COLLECTOR MADE ACCORDING TO SAID METHOD
PROCEDE DE FABRICATION D'UN ANNEAU DE COLLECTEUR, ET COLLECTEUR FABRIQUE SELON CE PROCEDE

(30) Priorität: 30.09.1997 DE 19743086
(43) Veröffentlichungstag der Anmeldung: 19.07.2000
(73) Patentinhaber: ROBERT BOSCH GMBH, 70442 Stuttgart (DE)
(72) Erfinder: BEHRENS, Friedrich, D-31199 Diekholzen (DE); DEIERLING, Hans, D-31137 Hildesheim (DE); OSSENKOPP, Stefan, D-31137 Hildesheim (DE); SCHWERDTLE, Martin, D-71701 Schwieberdingen (DE)
(86) Internationale Anmeldenummer: DE9800941
(87) Internationale Veröffentlichungsnummer: WO9917409

(56) Entgegenhaltungen:
- EP-A- 0 019 472
- DE-A- 19 543 998
- DE-B- 1 218 053
- US-A- 5 204 574

## Beschreibung

### Stand der Technik

Die Erfindung geht aus von einem Verfahren zum Herstellen eines Kommutatorringes für einen Kommutator nach der Gattung des Hauptanspruchs. Es ist bekannt, Kommutatorringe aus einem zuvor geprägten Bandmaterial für sogenannte Rollkommutatoren herzustellen. Hierbei wird ein gegebenenfalls profiliertes Endlosband, dessen Breite der späteren axialen Länge des Kommutators entspricht, quer zur Bewegungsrichtung des Bandes mittels eines Formwerkzeugs mit Nuten versehen, so daß lediglich noch über Stege verbundene Lamellen entstehen. Entsprechend der Lamellenanzahl eines Kommutatorrings wird eine entsprechende Anzahl von Lamellen von dem fortlaufenden, jetzt geformten Band abgetrennt und zu dem Kommutatorring geschlossen. Zur Stabilisierung des Kommutatorrings und Isolierung der einzelnen Lamellen untereinander wird der Kommutatorring zumeist zusammen mit einer metallischen Nabe in eine Isolierstoffmasse eingebettet.

Um beim späteren bestimmungsgemäßen Einsatz des Kommutatorrings ein axiales und radiales Verschieben der Lamellen zu verhindern, ist es bekannt - z.B. aus der DE-AS 12 18 053 - zur Verankerung in der Isolierstoffmasse an die Lamellen rückseitig Widerhaken anzuscheren. Das hat den Nachteil, daß durch das Anscheren der Widerhaken die nutzbare Lamellenstärke des Kommutatorrings verkleinert wird.

Außerdem ist aus der US-PS 5,204,574 ein Kommutatorring bekannt, der in Axialrichtung der Lamellen verlaufende Schwalbenschwanzprofile aufweist, mittels derer eine Sicherung der Lamellen in radialer Richtung des Kommutators gewährleistet ist, während jedoch in axialer Richtung des Kommutators eine Verschiebung nicht ausgeschlossen werden kann.

Um diesen Nachteil abzuhelfen, ist es aus der DE-OS 195 43 998 bekannt, zur axialen Sicherung der Lamellen mittels eines Spezialverfahrens die Schwalbenschwanzprofile so zu gestalten, daß über den axialen Abstand eine Unterbrechung des Schwalbenschwanzprofils erfolgt. Dieses Herstellungsverfahren ist jedoch noch verhältnismäßig aufwendig, was zu einer Verteuerung führt.

### Vorteile der Erfindung

Das erfindungsgemäße Verfahren zum Herstellen eines Kommutatorrings mit den kennzeichnenden Merkmalen des Hauptanspruchs hat demgegenüber den Vorteil, daß die Herstellung desselben noch einfacher und billiger wird und daß auch ganz spezielle Formen der Schwalbenschwanznut zur besonders guten Halterung der Lamellen einfacher herstellbar sind.

Weitere Vorteile der Erfindung ergeben sich aus der nachfolgenden Beschreibung, den Unteransprüchen und der Zeichnung.

### Zeichnung

Die Erfindung wird nachfolgend durch zwei Ausführungsbeispiele anhand der zugehörigen Zeichnungen näher erläutert. Es zeigen:
Figur 1 eine Ansicht auf die Stirnseite eines Lamellenprofilbandes mit gefurchten Schwalbenschwanznuten;;
Figur 2 einen Querschnitt durch das Profil der Lamellen nach A-A aus Figur 1;
Figur 3 eine Ansicht von der Rückseite des Lamellenprofilbandes nach Figur 1;
Figur 4 eine Vorrichtung zur Herstellung des Lamellenprofilbandes in der Draufsicht;
Figur 5 einen Querschnitt nach A-A aus Figur 4,
Figur 6 einen Querschnitt nach B-B aus Figur 4;
Figur 7 ein Spezialwerkzeug für die Vorrichtung nach Figur 4 bis 6 zum Furchen der Lamellen in Seitenansicht;
Figur 8 in der Draufsicht;
Figur 9 in der Vorderansicht und
Figur 10 einen vergrößerten Ausschnitt der Furchmesser-Stirnseite;
Figur 11 zeigt eine Draufsicht auf die Stirnseite eines fertig gerollten Lamellenringes und
Figur 12 einen fertigen Kommutator im Längsschnitt;
Figur 13 zeigt als weiteres Ausführungsbeispiel ein Lamellenprofilband mit Doppel-Schwalbenschwanznuten.

### Beschreibung der Ausführungsbeispiele

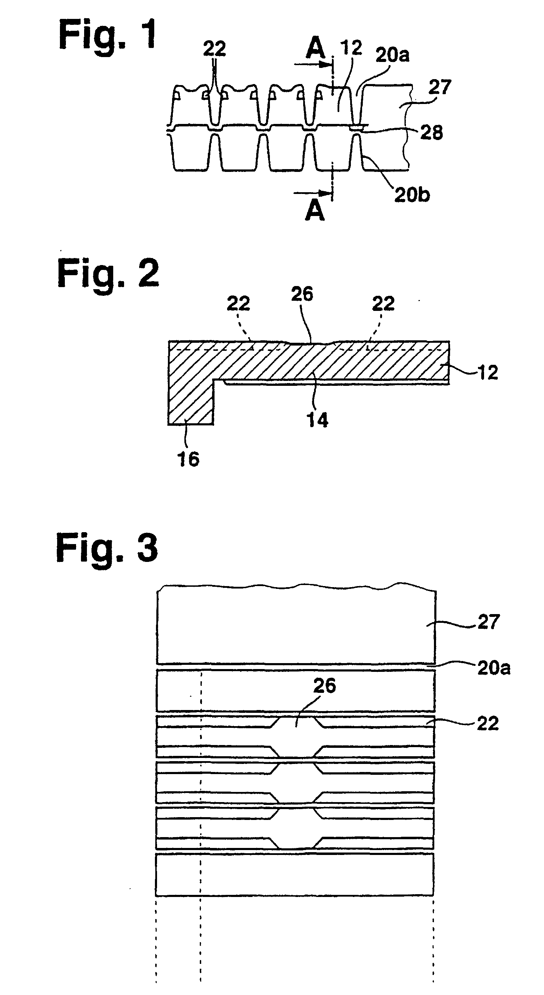

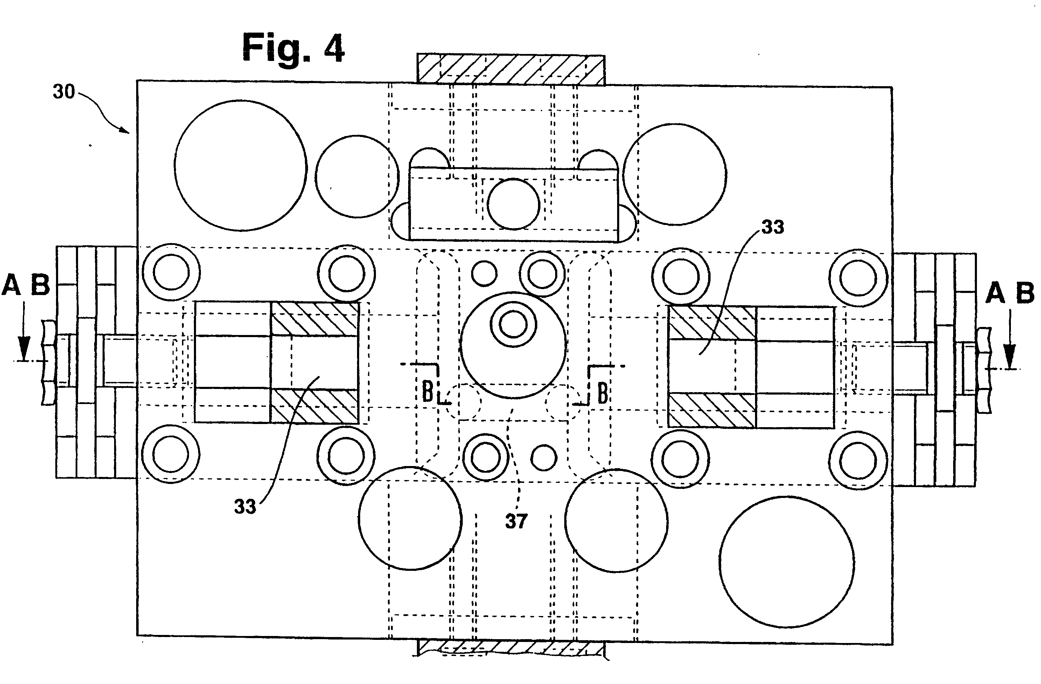

In den Figuren 1 bis 3 ist ein Lamellenprofilband als Lamellenstrang 27 ausschnittsweise dargestellt, welches ein L-förmiges Kupferprofil aufweist. In der später näher erörterten Prägevorrichtung nach Figur 4 bis 6 wird der Lamellenstrang in einzelnen Fertigungsschritten bearbeitet. In einem ersten Schritt werden dabei durch gegenläufige Stempel in bekannter Weise Prägenuten 20a, 20b in den Lamellenstrang geprägt und dadurch die Lamellen 12 eines Kommutators vom Strang abgeteilt. Dabei verbleibt zwischen den Lamellen 12 ein Verbindungssteg 28. In weiteren Arbeitstakten werden nun an den Längsseiten der Lamellen 12 Schwalbenschwanznuten 22 angebracht, die der späteren Verankerung der Lamellen im Isolierstoff des Kommutators dienen.

Die Lamellen 12 haben einen langen Schenkel 14, dessen Außenseite später die Lauffläche des Kommutators bildet. Ein kurzer, radial nach außen weisender Schenkel 16 dient der Kontaktierung der Lamellen 12 mit den Wicklungsanschlüssen des Rotors einer nicht dargestellten elektrischen Maschine. Die Schwalbenschwanznuten 22 verlaufen in Längsrichtung der Lamellenrückseite, d.h. in Axialrichtung des Kommutators und sind etwa in ihrer Mitte unterbrochen. Dabei verbleibt etwa in der Mitte der Lamellen zwischen den Schwalbenschwanznuten 22 eine nutfreie Zone 26.

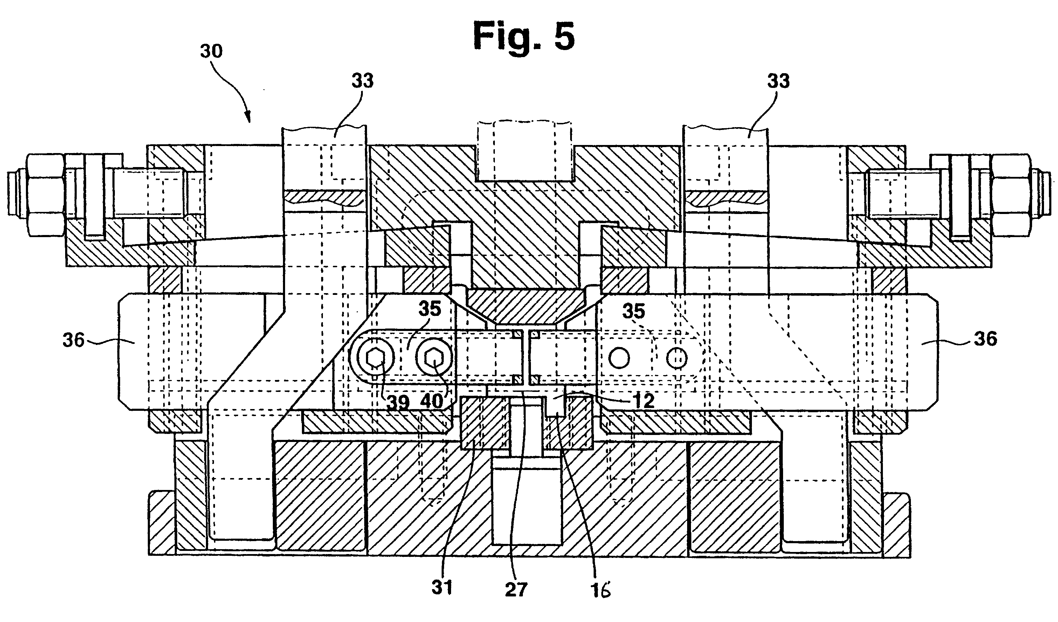

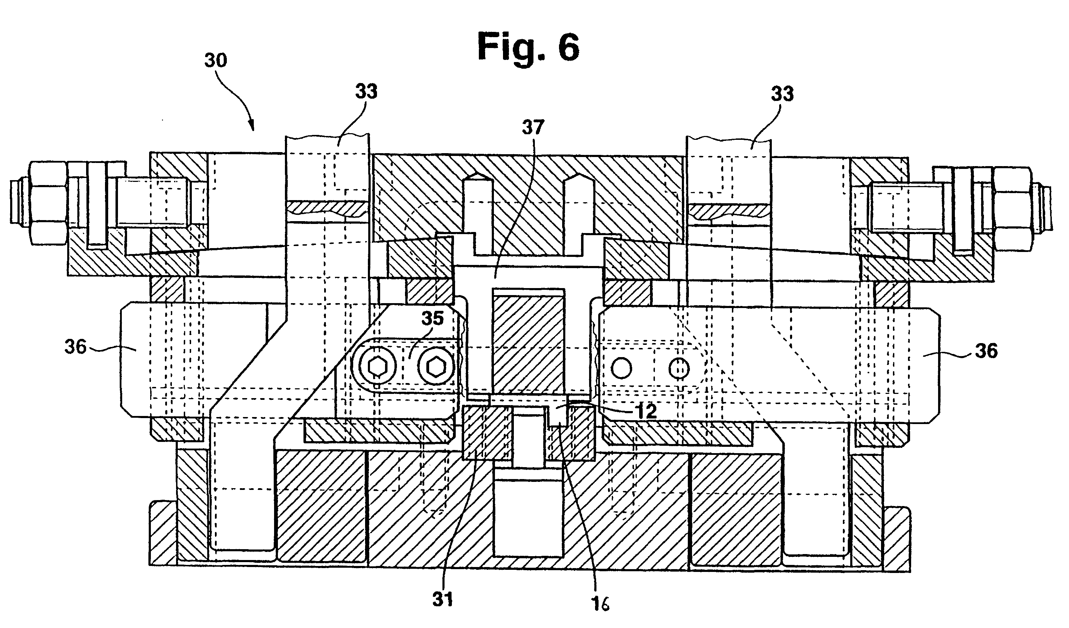

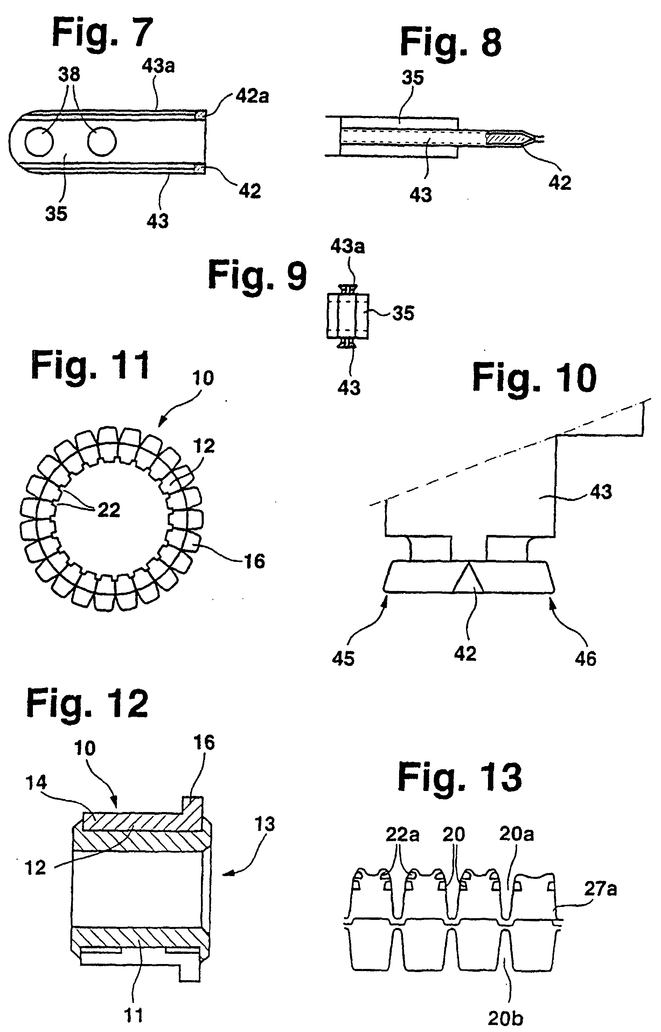

Die Figuren 4 bis 6 zeigen eine Vorrichtung 30 zur Herstellung eines Lamellenstranges nach den Figuren 1 bis 3. In Figur 5 sieht man in dem Längsschnitt durch die Vorrichtung 30 den Lamellenstrang 27 rücklings auf einer Auflage 31 liegen, und zwar mit dem kurzen Schenkel 16 nach unten. Eine Vorschubeinrichtung transportiert den Lamellenstrang 27 zum Betrachter hin und an jeder Lamelle 12 wird zunächst von einem nicht erkennbaren Prägewerkzeug eine Prägenut 20a eingeprägt. Sodann werden durch zwei senkrecht nach oben und unten sich bewegende Kniehebel 33 mit Hilfe jeweils eines speziellen Werkzeuges, dem sogenannten Furchwerkzeug 35, wie es in den Figuren 7 bis 10 dargestellt ist, gleichzeitig von beiden Stirnseiten der Lamellen her, d.h. von rechts und links je eine Schwalbenschwanzprofilnut 22 an jeder Längsseite der Lamellen 12 eingefurcht, und zwar jeweils bis zu deren nutfreien Zone 26 (siehe Figur 1 bis 3). Die Bewegungsrichtung des Werkzeugs 35 erfolgt dabei in waagerechter Richtung. Es handelt sich um eine Hin- und Herbewegung durch eine Kniehebelführung 36. Nach jedem Einfurchvorgang an den einander gegenüberliegenden Lamellenseiten der benachbarten Lamellen 12 wird der Lamellenstrang 27 um eine Lamelle 12 weiter vorbewegt. Während des Furchvorgangs werden die Lamellen 12 mit einem in Figur 6 erkennbaren Niederhalter 37 gegen die Auflage 31 der Vorrichtung 30 gedrückt. In Figur 5 ist erkennbar, daß die Furchwerkzeuge 35 von den Stirnseiten der Lamellen 12 her in eine Längsnut 22a zwischen den Lamellen soweit eingetaucht sind, daß zwischen den einander gegenüberstehenden Furchwerkzeugen 35 noch der nötige Abstand zur Herstellung der nutfreien Zone 26 verbleibt.

In den Figuren 7 bis 10 ist das Furchwerkzeug 35 zu erkennen. Figur 5 zeigt die Seitenansicht mit seinen Befestigungslöchern 38, mit deren Hilfe es durch Schrauben 39, 40 gemäß Figur 5 in der Vorrichtung 30 festgespannt ist. Das Furchwerkzeug 35 trägt oben und unten jeweils ein doppelseitiges Furchmesser 43, 43a, welches vorne jeweils in eine Furchspitze 42, 42a ausläuft. In der Draufsicht nach Figur 8 sieht man die Spitze 42 des Furchwerkzeugs 35. In Figur 9 ist die Vorderansicht des Furchwerkzeugs 35 dargestellt, wobei die Figur 10 den unteren Teil der Figur 9 wesentlich vergrößert darstellt. Dort ist erkennbar, daß sich an beiden Seiten des Furchmessers 43 jeweils eine Furchkante 45, 46 befindet. Mit Hilfe der Furchmesser 43 und der Furchspitze 42 erfolgt somit das Einfurchen der Schwalbenschwanzprofilnuten 22 auf beiden Längsseiten der Prägenuten 20a an den Lamellen 12 gleichzeitig von beiden Stirnseiten her bis zur mittleren verbleibenden Zone 26, welche von den Schwalbenschwanznuten freibleibt. Insbesondere aus Figur 10 wird deutlich, daß durch die Furchkanten 45 und 46 des unteren Furchmessers 43 je eine Furche in den einander gegenüberliegenden Längsseiten der benachbarten Lamellen 12 hergestellt wird. Sobald die Standzeiten der unteren Furchmesser 43 erreicht sind, wird das Furchwerkzeug 35 aus der Vorrichtung 30 herausgenommen und um 180° um die Längsachse gedreht, so daß nunmehr das obere Furchmesser 43a zum Einsatz kommen kann.

Nachdem auf diese Weise nacheinander die erforderliche Lamellenzahl des Lamellenstranges 27 gemäß Figur 1 erreicht ist, wird dieser vom Profilband durch die Vorrichtung 30 abgetrennt und an einer nächsten Station wird aus dem Lamellenstrang 27 in bekannter Weise ein Lamellenring 10 gebildet, wie er in Figur 11 dargestellt ist. Er besteht aus einer Vielzahl ringförmig angeordneter Lamellen 12, die im Längsschnitt gesehen, ein L-förmiges Profil aufweisen. Die Lamellen werden anschließend mit ihren Schwalbenschwanznuten 22 zur Verankerung in eine Isolierstoff-Preßmasse 11 eingebettet, welche ggf. an ihrer Nabenbohrung 13 noch eine Metallnabe aufnehmen kann. Nach dem Einbetten des Lamellenrings werden die Verbindungsstege 28 zwischen den Lamellen im Bereich der Kollektorlauffläche abgedreht, so daß die Lamellen nunmehr gegeneinander isoliert in der Kollektornabe verankert sind.

Figur 13 zeigt ein zweites Ausführungsbeispiel der Erfindung, nämlich ein Lamellenstrang 27a mit Doppel-Schwalbenschwanznuten 22 und 22a. Auch dort wird zunächst nach dem Prägen der Längsnuten 20a und 20b die Schwalbenschwanznut 22 - wie zuvor beschrieben - in die Lamellenseiten eingefurcht. Dies geschieht in einer ersten Station der Vorrichtung 30. In einer nachfolgenden Station der gleichen Vorrichtung werden anschließend die oberen Schwalbenschwanznuten 22a mit einem ähnlichen Messer wie in den Figuren 7 bis 10 dargestellt und beschrieben - in die Lamellenseiten eingefurcht. Je nach Gestaltung des Furchmesserprofils sind hierbei verschiedene Ausführungsformen möglich. Mit derartigen Doppelfurchen wird die Verankerung der Lamellen 12 in dem Isolierstoff der Kommutatornabe weiter erhöht, so daß mit derartigen Lamellen höherer Drehzahlen bzw. größere Kommutatordurchmesser realisierbar sind. Eine Optimierung zwischen Ausreißfestigkeit des Isolierstoffmaterials einerseits und des Lamellenmaterials andererseits wird zweckmäßigerweise dadurch erzielt, daß die zuletzt eingebrachten Furchen 22a mehr oder weniger lang ausgebildet werden.

## Patentansprüche

1. Verfahren zum Herstellen eines Kommutators einer Elektromaschine mit einem Kommutatorring (10), der aus über seinen Umfang nebeneinander angeordneten und aus einem Bandmaterial (27) durch eingeprägte Nuten (20a, 20b) geformten Lamellen (12) besteht, die mittels an ihren Innenseiten ausgebildete und in Axialrichtung der Lamellen verlaufende, als Befestigungsmittel dienende Schwalbenschwanznuten (22) in einem Isolierkörper (11) verankert sind, **dadurch gekennzeichnet, daß** die Schwalbenschwanznuten (22, 22a) durch gleichzeitiges, von beiden Stirnseiten der Lamellen (12) ausgehend und mittels je eines Werkzeuges (35) erfolgendes seitliches Einfurchen der Lamellen gebildet werden derart, daß etwa in der Mitte der Lamellen zwischen den Schwalbenschwanznuten eine nutfreie Zone (26) verbleibt.

2. Verfahren nach Anspruch 1, **dadurch gekennzeichnet, daß** die messerartig ausgebildeten Furchwerkzeuge (35) sich gegenläufig längs der Lamellenseiten hin- und herbewegen.

3. Verfahren nach Anspruche 1 oder 2, **dadurch gekennzeichnet, daß** die Schwalbenschwanznuten mit einem Spezialwerkzeug als Doppel-Schwalbenschwanznuten (22, 22a) an den Lamellenseiten übereinanderliegend eingefurcht werden.

4. Verfahren nach einem der Ansprüche 1 bis 3, **dadurch gekennzeichnet, daß** das Furchen der Lamellen in einer Vorrichtung (30) erfolgt, in welcher der Lamellenstrang (27) so eingelegt ist, daß die langen Schenkel (14) der Lamellen mit ihren Stirnseiten dem Werkzeug (35) zugewandt sind, wobei das Prägen der Nuten (20a) zwischen den Lamellen (12) zuvor in der gleichen Vorrichtung erfolgt.

5. Verfahren nach einem der Ansprüche 1 bis 4, **dadurch gekennzeichnet, daß** der Furchvorgang gleichzeitig in zwei nebeneinanderliegenden Lamellen an den sich gegenüberliegenden Lamellenseiten erfolgt.

6. Verfahren nach Anspruch 3, **dadurch gekennzeichnet, daß** bei den Doppel-Schwalbenschwanznuten (22, 22a) in einer ersten Station der Vorrichtung (30) die unteren Nuten (22) und in einer nachfolgenden Station die oberen Nuten (22a) in die Lamellenseiten eingefurcht werden.

7. Kommutator einer Elektromaschine mit einem Kommutatorring (10) aus über den Umfang nebeneinander angeordneten Lamellen (12), die über Befestigungsmittel in einem Isolierstoffkörper (11) befestigt sind, **dadurch gekennzeichnet, daß** die nach einem Furchverfahren gemäß Anspruch 1 hergestellten Befestigungsmittel als unterbrochene gefurchte Schwalbenschwanznuten (22) ausgebildet sind.

8. Kommutator nach Anspruch 7, **dadurch gekennzeichnet, daß** das Befestigungsmittel als gefurchte Doppel-Schwalbenschwanznut (22a) ausgebildet ist.

## Claims

1. Method of producing a commutator of an electrical machine with a commutator ring (10), which comprises segments (12) which are arranged next to one another over its circumference, are formed from a strip material (27) by stamped-in slots (20a, 20b) and are anchored in an insulator (11) by means of dovetail slots (22) formed on the insides of said segments, running in the axial direction of the segments and serving as fastening means, **characterized in that** the dovetail slots (22, 22a) are formed by being laterally gouged into the segments simultaneously from both end sides of the segments (12) by means of a separate tool (35) in each case, in such a way that a slot-free zone (26) remains approximately in the centre of the segments between the dovetail slots.

2. Method according to Claim 1, **characterized in that** the gouging tools (35), formed like blades, move back and forth in opposite directions along the segment sides.

3. Method according to Claim 1 or 2, **characterized in that** the dovetail slots are gouged in one above the other on the segment sides with a special tool as double dovetail slots (22, 22a).

4. Method according to one of Claims 1 to 3, **characterized in that** the gouging of the segments takes place in a device (30) in which the strand of segments (27) is placed in such a way that the long bars (14) of the segments are facing the tool (35) with their end sides, the stamping of the slots (20a) between the segments (12) taking place in advance in the same device.

5. Method according to one of Claims 1 to 4, **characterized in that** the gouging operation takes place simultaneously in two segments lying next to each other on segment sides lying opposite each other.

6. Method according to Claim 3, **characterized in that**, in the case of the double dovetail slots (22, 22a), the lower slots (22) are gouged into the segment sides in a first station of the device (30) and the upper slots (22a) are gouged into the segment sides in a downstream station.

7. Commutator of an electrical machine with a commutator ring (10) comprising segments (12) which are arranged next to one another over the circumference and are fastened in an insulator (11) by fastening means, **characterized in that** the fastening means produced by a gouging method according to Claim 1 are formed as interrupted gouged dovetail slots (22).

8. Commutator according to Claim 7, **characterized in that** the fastening means is formed as a gouged double dovetail slot (22a).

## Revendications

1. Procédé de fabrication d'un commutateur d'une machine électrique comportant une bague de collecteur (10) composée de lamelles (12) réparties à sa périphérie, de manière juxtaposée et mises en forme à partir d'une matière en ruban (27) par des rainures (20a, 20b) embouties, les lamelles étant accrochées dans le corps de matière isolante (11) par des rainures à section en queue d'aronde (22) réalisées dans leur côté intérieur et s'étendant dans la direction axiale des lamelles pour servir de moyen de fixation,
**caractérisé en ce qu'**
on forme les rainures en queue d'aronde (22, 22a) en réalisant des sillons dans les lamelles simultanément à partir des deux faces frontales des lamelles (12) à l'aide d'un outil (35) de façon à laisser une zone sans rainure (26) au milieu des lamelles entre les rainures en queue d'aronde.

2. Procédé selon la revendication 1,
**caractérisé en ce que**
les outils à sillons (35) en forme de couteau se déplacent en sens opposé suivant un mouvement de va et vient le long des côtés des lamelles.

3. Procédé selon les revendications 1 ou 2,
**caractérisé en ce qu'**
on réalise les rainures à section en queue d'aronde avec un outil particulier comme rainures en queue d'aronde double (22, 22a), de manière superposée dans les côtés des lamelles.

4. Procédé selon l'une des revendications 1 à 3,
**caractérisé en ce qu'**
on réalise les sillons des lamelles dans un dispositif (30) dans lequel on place le cordon de lamelles (27) pour que les branches longues (14) des lamelles soient tournées par leur face frontale contre l'outil (35), l'emboutissage des rainures (20a) entre les lamelles (12) étant réalisé précédemment dans le même dispositif.

5. Procédé, selon l'une des revendications 1 à 4,
**caractérisé en ce qu'**
on réalise les sillons en même temps dans deux côtés opposés de deux lamelles opposées.

6. Procédé selon la revendication 3,
**caractérisé en ce que**
dans le cas de rainures à double queue d'aronde (22, 22a), dans un premier poste du dispositif (30) on réalise les rainures inférieures (22) et dans le poste suivant, on réalise les rainures supérieures (22a) dans les côtés des lamelles.

7. Collecteur de machine électrique comportant une bague de collecteur (10) formée de lamelles (12) juxtaposées à la périphérie et qui sont fixées par des moyens de fixation à un corps isolant (11),
**caractérisé en ce que**
les moyens de fixation réalisés, selon le procédé de réalisation de sillons de la revendication 1, sont des rainures en queue d'aronde (22) à sillons interrompus.

8. Collecteur selon la revendication 7,
**caractérisé en ce que**
le moyen de fixation est en forme de rainures à double queue d'aronde (22a) en sillons.
